# EUROPEAN PATENT APPLICATION

(11) **EP 2 481 598 A1**
(43) Date of publication of application: **01.08.2012**
(21) Application number: 10818389.8
(22) Date of filing: 14.09.2010
(51) Int. Cl.: B41J 3/60, B41J 13/00, B65H 15/00, B65H 29/60

(54) **PROCESSING APPARATUS AND METHOD FOR RECORDING MEDIUM EMBEDDED WITH INFORMATION**

(30) Priority: 24.09.2009 CN 200910176923
(71) Applicant: Shandong New Beiyang Information Technology Co., Ltd., Hi-tech Zone Weihai Shandong 264209 (CN)
(72) Inventor: CONG, Qiangzi, Weihai Shandong 264209 (CN); JIANG, Tianxin, Weihai Shandong 264209 (CN); ZHENG, Lei, Weihai Shandong 264209 (CN); CHE, Lei, Weihai Shandong 264209 (CN); LIU, Kai, Weihai Shandong 264209 (CN); ZHANG, Jigang, Weihai Shandong 264209 (CN)
(74) Representative: Hutter, Jacobus Johannes
(86) International application number: PCT/CN2010/076918
(87) International publication number: WO 2011/035695

(57) **Abstract**

An apparatus for processing a recording medium with embedded information comprises: a passage mechanism (2) including a first passage (2 ), a loop passage (22) and recording medium conveying rollers (23), wherein a first opening (22a) and a second opening (22b) of the loop passage are connected to the tail end of the first passage; a first guide mechanism (41, 42) configured to selectively communicate the first passage with the first opening or the second opening of the loop passage; and a processing device (3) including a magnetic head (31) and a print head (32) which are arranged in the first passage, wherein the magnetic head is arranged at a side of a recording medium inlet/outlet port which is adjacent to a leading end of the first passage . A method for processing the recording medium with embedded information is also disclosed. According to the apparatus and method for processing the recording medium mentioned above, the recording medium can be turned over automatically during moving through the loop passage, so that the printing on both sides of the recording medium can be realized by one single print head, and thus a comprehensive process on the recording medium with embedded information is realized, and the cost of the apparatus is reduced.

## Description

The application claims the priority of Chinese patent application No. 200910176923.1 titled as "APPARATUS AND METHOD FOR PROCESSING A RECORDING MEDIUM WITH EMBEDDED INFORMATION" and filed on September 24, 2009, the entire contents of which are hereby incorporated by reference.

### Technical field of the invention

The present invention relates to the technical field of processing a recording medium, in particular to an apparatus and a method for processing a recording medium with embedded information.

### Background of the invention

When securities such as checks and tickets are printed, magnetic ink information is generally embedded into a recording medium to prevent forgery by criminals. For example, checks are widely applied in bargaining transaction and personal consumption.

Generally, information such as the par value of the check and the drawee signature is recorded on a front side of a check. For the convenience to describe, such information is referred to as front-side signing information. Besides, the check is recorded with information such as banking organization code, personal bank account and check series number through magnetic ink. The front-side signing information of the traditional checks is manually signed by the owner of the check. However, in recent years, people have started to print the front-side signing information by a printer. The magnetic ink characters of the check can be identified by a magnetic head through an MICR technology. For example, after a check is received by a retail store, the magnetic ink on the check is firstly detected by a card reader, and then the information recorded with the magnetic ink is read, to affirm the validness of the check. After the check is affirmed to be valid, the operator prints the endorsement such as a certification and a name of a user who receives the check on the back side of the check by the printer.

Since different apparatuses are required to read the magnetic ink of the check, print the endorsement and print the front-side signing information, the processing steps are cumbersome, and the processing time is long.

US patent US6,350,005 proposes an apparatus for processing a recording medium with embedded information, and the apparatus comprises: a passage through which a recording medium can be conveyed; an information reading head arranged along the passage for reading the recorded information; a first print head arranged on a first side of the passage for printing information on a first side of the recording medium; a second print head arranged on a second side opposite to the first side of the passage for printing information on a second side opposite to the first side of the recording medium; an insertion opening connected to the passage wherein the recording medium is inserted through the insertion opening; and a discharge opening connected to the passage wherein the recording medium is discharged through the discharge opening, wherein the insertion opening and the discharge opening are arranged at respective end of the passage; wherein the first print head is arranged between the second print head and the discharge opening.

In the apparatus for processing a recording medium, two print heads are provided to realize the printing on both sides of the recording medium, so that the cost of the apparatus is relatively high, the structure is relatively complicated, and the apparatus failure rate is increased.

### Summary of the invention

Therefore, the object of the present invention is to provide an apparatus for processing a recording medium with embedded information so as to realize the identification of the magnetic information and to realize the printing on both sides of the recording medium by providing one single print head.

For this purpose, in one aspect, the present invention provides an apparatus for processing a recording medium with embedded information, comprising:
a passage mechanism including a first passage, a loop passage and recording medium conveying rollers, wherein a first opening and a second opening of the loop passage are connected to the tail end of the first passage; a first guide mechanism configured to selectively communicate the first passage with the first opening or the second opening of the loop passage ; and a processing device including a magnetic head and a print head which are arranged in the first passage, wherein the magnetic head is arranged at a side of a recording medium inlet/outlet port which is adjacent to an leading end of the first passage.

Further, the above-mentioned first guide mechanism comprises: a first guide plate arranged at the tail end of the first passage and provided with an initial position in which the first passage is communicated with one of the first opening and the second opening and a switch position in which the first passage is communicated with the other one of the first opening and the second opening ; and a first driving mechanism configured to drive the first guide plate to switch between the initial position and the switch position.

Further, the above-mentioned first driving mechanism is an electromagnet driving mechanism.

Further, the above-mentioned first driving mechanism is an elastic element, wherein one end of the elastic element is connected with the first guide plate and the other end thereof is connected with a rack of the apparatus for processing a recording medium.

Further, the above-mentioned processing apparatus further comprises a scanning module located within the first passage and including at least one image sensor.

Further, the above-mentioned first passage comprises: a first sub-passage and a second sub-passage, wherein a recording medium inlet/outlet port is arranged between the first sub-passage and the second sub-passage, wherein a second guide mechanism is arranged between the first sub-passage and the second sub-passage and configured to selectively communicate the first sub-passage with the recording medium inlet/outlet port or the second sub-passage.

Further, the second guide mechanism comprises: a second guide plate having a first position in which the recording medium inlet/outlet port is communicated with the first sub-passage and a second position in which the recording medium inlet/outlet port is communicated with the second sub-passage; a cam configured to drive the second guide plate to move between the first position and the second position; and an elastic element configured to keep the second guide plate in the first position.

Further, the apparatus for processing a recording medium of the present invention further comprises: an automatic paper feeder located on the upstream of the recording medium inlet/outlet port at the leading end of the first passage and configured to store a plurality of recording mediums to be processed and feed the plurality of recording mediums to be processed into the first sub-passage one by one.

In another aspect, the present invention provides a method for processing a recording medium with embedded information, comprising the following steps: A) reading the magnetic information embedded in the recording medium during the movement of the recording medium into the first passage; B) printing on the first side of the recording medium after the magnetic information thereof is read; C) after guiding the printed recording medium into the loop passage at the tail end of the first passage, returning the recording medium back into the first passage so as to turn the recording medium over; and D) printing on the second side of the recording medium during the recording medium moving away from the first passage.

Further, the above-mentioned Step A further comprises: when reading magnetic information of the recording medium is failed, guiding the recording medium out from the first passage before guiding the recording medium into the loop passage.

Further, the method of the present invention further comprises: E) before Step B, scanning the recording medium image before printing; and F) after Step D, scanning the recording medium image after printing.

The apparatus for processing a recording medium According to the present invention comprises a first passage (namely, straight passage), a loop passage and a guide mechanism, the straight passage is joined with the loop passage, the recording medium is guided by the guide mechanism to be conveyed around the loop passage, the processing device is arranged in the straight passage, and operations for the recording medium with embedded information, such as reading the embedded information and printing on both sides of the recording medium, can be realized. Particularly, the recording medium can be turned over automatically during moving through the loop passage, so that the printing on both sides of the recording medium can be realized by one single print head, and thus a comprehensive process on the recording medium with embedded information is realized, and the cost of the apparatus is reduced.

Besides the objects, features and advantages described above, the present invention also has other objects, features and advantages. Other objects, features and advantages of the present invention will be further described in detail below with reference to the drawings.

### Brief description of the drawings

Drawings, which constitute a part of the description and are provided for further understanding of the present invention, show the preferred embodiments of the present invention, and explain the principle of the present invention together with the description. In the drawings:
Fig. 1 is a schematic view of an apparatus for processing a recording medium with embedded information according to a first embodiment of the present invention, wherein the first guide plate is in the initial position;
Fig. 2 is a schematic view of the apparatus for processing a recording medium as shown in Fig. 1 wherein the first guide plate is in the switch position;
Fig. 3a is a schematic view of the first driving mechanism of the apparatus for processing a recording medium according to an embodiment of the present invention with the first driving mechanism being as an electromagnet mechanism, wherein the first guide plate is in the initial position;
Fig. 3b is a schematic view of the first driving mechanism of the apparatus for processing a recording medium according to an embodiment of the present invention with the first driving mechanism being as an electromagnet mechanism, wherein the first guide plate is in the switch position;
Fig. 4 is a schematic view of the first driving mechanism of the apparatus for processing a recording medium according to the embodiment of the present invention with the first driving mechanism being as an elastic mechanism;
Fig. 5 shows a working flow chart of the apparatus for processing a recording medium according to the first embodiment of the present invention;
Fig. 6 is a schematic view of an apparatus for processing a recording medium with embedded information according to the second embodiment of the present invention;
Fig. 7 is a schematic view of an apparatus for processing a recording medium with embedded information according to the third embodiment of the present invention, wherein the first guide plate is in the initial position and the second guide plate is in the first position;
Fig. 8 is a schematic view of the apparatus for processing a recording medium as shown in Fig. 7, wherein the second guide plate is in the second position;
Fig. 9a is a schematic view of the second driving mechanism of the apparatus for processing a recording medium as shown in Fig. 7 with the second driving mechanism being as a cam mechanism, wherein the second guide plate is in the first position;
Fig. 9b is a schematic view of the second driving mechanism of the apparatus for processing a recording medium as shown in Fig. 7 with the second driving mechanism being as a cam mechanism, wherein the second guide plate is in the second position;
Fig. 10 shows a working flow chart of the apparatus for processing a recording medium according to the third embodiment of the present invention; and
Fig. 11 is a schematic view of an apparatus for processing a recording medium with embedded information according to the fourth embodiment of the present invention.

### Detailed description of the invention

The embodiments of the present invention will be described in detail below with reference to drawings, however the present invention may be implemented by various embodiments defined and covered by the claims. In the drawings, identical components are indicated with identical reference numbers.

### First Embodiment

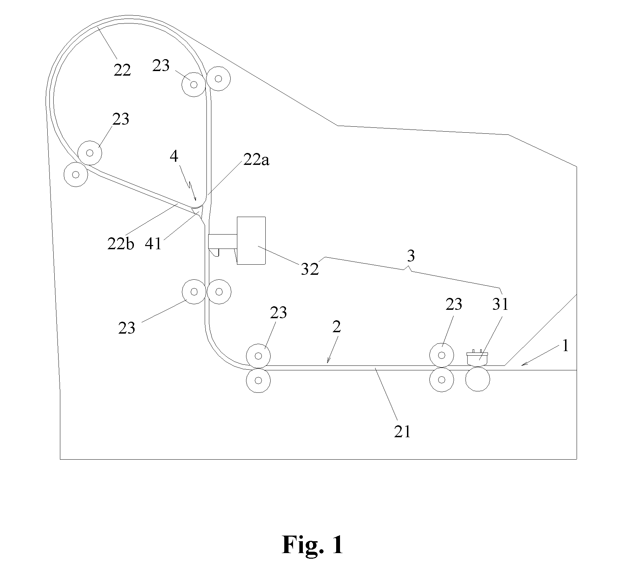

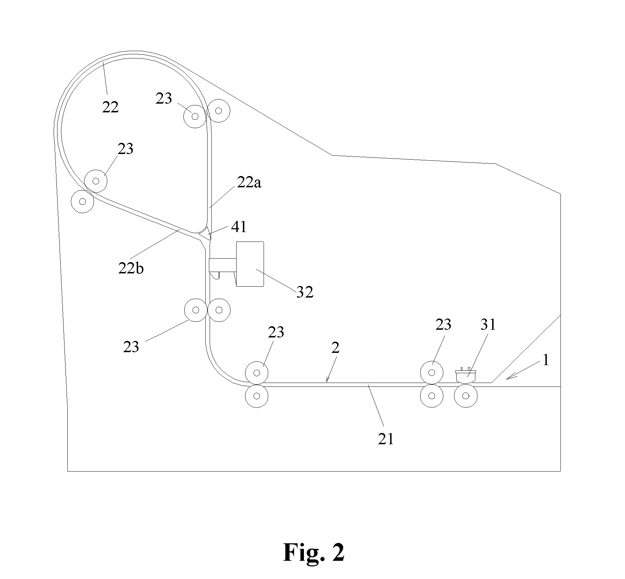

Figs. 1 and 2 show an apparatus for processing a recording medium according to the first embodiment of the present invention. As shown in Figs. 1 and 2, the apparatus for processing a recording medium comprises an inlet/outlet port 1, a passage mechanism 2, a processing device 3 and a guide mechanism 4.

The passage mechanism 2 includes a first passage 21 and a loop passage 22. The leading end of the first passage 21 is connected with the inlet/outlet port 1; the tail end of the first passage 21 is joined with the loop passage 22, and the loop passage 22 is divided by the first passage 21, forming two openings which are referred to as a first opening 22a and a second opening 22b for the convenience to describe.

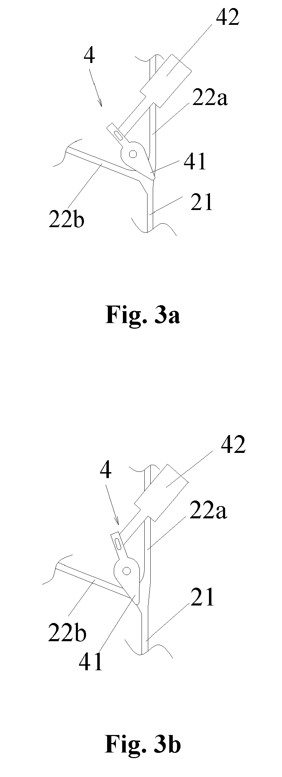

The guide mechanism 4 comprises a first guide plate 41 and a first driving mechanism 42 (see Figs. 3a and 3b); the first guide plate 41 is located at the junction between the loop passage 22 and the first passage 21 and articulated with a rack of the apparatus for processing a recording medium to be capable of rotating with respect to the articulated point, and configured to communicate the second end of the first passage 21 with the first opening 22a or the second opening 22b of the loop passage 22. The first guide plate 41 is provided with an initial position and a switch position.

In the embodiment, when the first guide plate 41 is in the initial position, it communicates the second end of the first passage 21 with the first opening 22a of the loop passage 22, and simultaneously closes the second end of the first passage 21 from the second opening 22b of the loop passage 22, the recording medium can enter the loop passage 22 from the first passage 21. After the recording medium moves in the loop passage 22 for one circle, the first guide plate 41 is rotated to the switch position from the initial position so as to communicate the second end of the first passage 21 with the second opening 22b of the loop passage 22 and simultaneously close second end of the first passage 21 from the first opening 22a of the loop passage 22, so that the recording medium can be conveyed to the first passage 21 from the loop passage 22.

As the initial position and the switch position are the positions relative to each other, in other embodiments, the initial position and the switch position may be arranged as be just opposite to those in this embodiment.

The first driving mechanism 42 is connected with the first guide plate 41 and configured to drive the first guide plate 41 to switch between the initial position and the switch position.

Preferably, the first driving mechanism 42 is an electromagnet mechanism, as shown in Figs. 3a and 3b wherein the electromagnet mechanism is connected with the first guide plate 41, and the first guide plate 41 is driven to rotate to the set position by controlling the electromagnet mechanism.

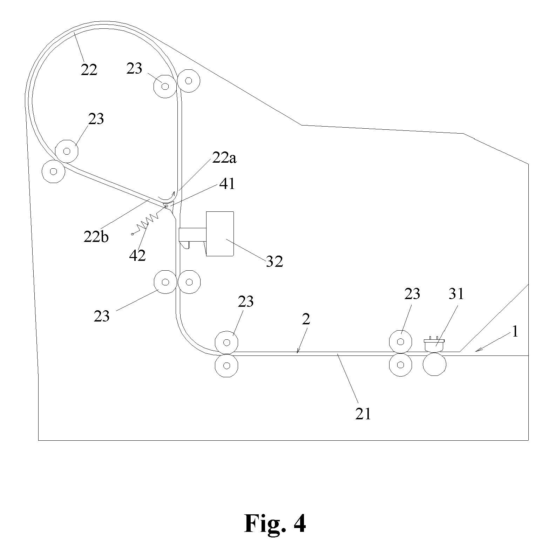

Of course, the first driving mechanism 42 also may be an elastic mechanism, as shown in Fig. 4 wherein one end of the elastic mechanism is connected with the first guide plate 41 and the other end thereof is connected with the rack, the first guide plate 41 is kept in the initial position under the elasticity effect of the elastic mechanism. When the recording medium drives the first guide plate 41 against the elastic force, the first guide plate 41 is rotated to the switch position.

It is easy to come into mind that the first driving mechanism 42 may also be a motor mechanism or other mechanisms which can realize the position switchover of the first guide plate 41.

The passage mechanism 2 further comprises a plurality of conveying rollers 23 which are arranged in the first passage and the loop passage and configured to convey the recording medium.

The processing device 3 comprises a magnetic head 31 and a print head 32. The magnetic head 31 is located in the leading end of the first passage 21 which is adjacent to the inlet/outlet port 1, and the print head 32 is located at the tail end of the first passage 21 which is adjacent to the guide mechanism 4.

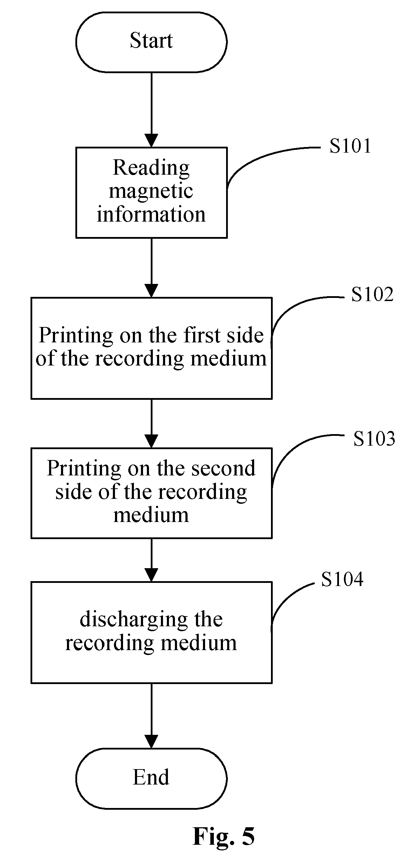

The working process of the apparatus for processing a recording medium provided in the first embodiment of the present invention will be described with reference to Fig. 5. For the convenience to describe, the two sides of the recording medium are referred to as a first side of the recording medium and a second side of the recording medium, respectively.

S101: reading the magnetic information

The recording medium enters the first passage 21, and the magnetic head 31 reads the magnetic information embedded in the recording medium, such as magnetic ink information, during the movement of the recording medium.

S102: printing on the first side of the recording medium

When the recording medium moves to the position of the print head 32, the first side of the recording medium is opposite to the print head 32. After the recording medium moves into the print position, the print head 32 is driven by a control device to print, and the print head 32 prints the set information on the first side of the recording medium during the movement of the recording medium. At this moment, the first guide plate 41 is in the initial position to guide the recording medium to enter the loop passage 22 from the first opening 22a.

S103: printing on the second side of the recording medium

After the recording medium completely enters the loop passage 22, the first guide plate 41 is rotated to the switch position. After the recording medium moves in the loop passage for one circle, the first guide plate 41 guides the recording medium to back to the first passage 21 from the second opening 22b.

As the recording medium moves in the loop passage for one circle, when the recording medium moves into the position of the print head 32, the second side of the recording medium is opposite to the print head 32. After the recording medium moves into the print position, the print head 32 is driven by the control device to print, and the print head 32 prints the set information on the second side of the recording medium during the movement of the recording medium.

S104: discharging the recording medium

After the printing on second side of the recording medium is completed, the recording medium is discharged from the apparatus for processing a recording medium through the inlet/outlet port 1 at the leading end of the first passage.

### Second Embodiment

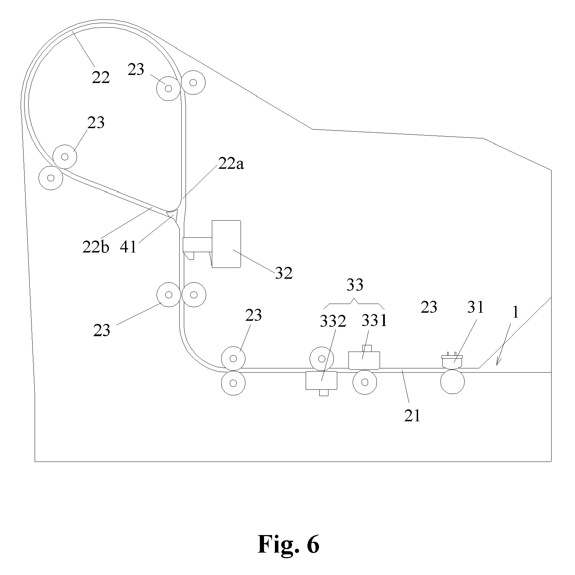

Fig. 6 is a schematic view of an apparatus for processing a recording medium with embedded information according to the second embodiment of the present invention. The difference between this embodiment and the first embodiment of the present invention is that the processing device further comprises a scanning module 33 which is located in the first passage and configured to obtain the surface image of the recording medium. The scanning module 33 comprises at least one image sensor for obtaining the recording medium image, and preferably, the scanning module 33 comprises a first image sensor 331 and a second image sensor 332 which are arranged opposite to each other and configured to obtain the images of the first side and the second side of the recording medium, respectively.

### Third Embodiment

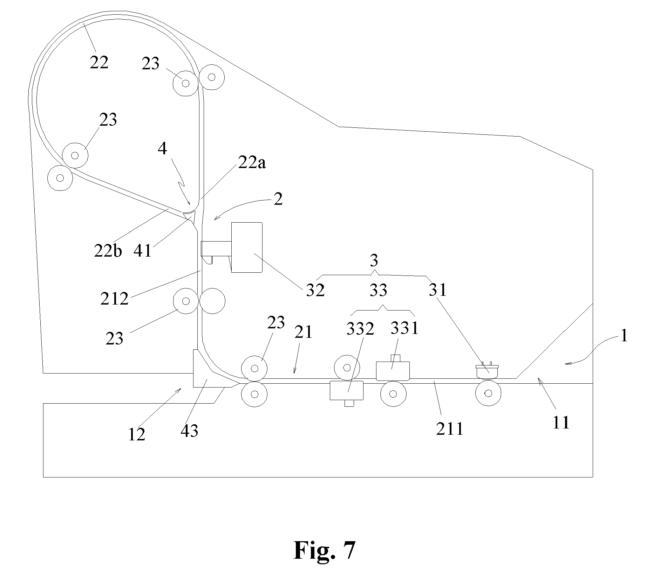

Fig. 7 is a schematic view of an apparatus for processing a recording medium with embedded information according to the third embodiment of the present invention. As shown, the apparatus for processing a recording medium comprises an inlet/outlet port 1, a passage mechanism 2, a processing device 3 and a guide mechanism 4.

The inlet/outlet port 1 comprises a first inlet/outlet port 11 and a second inlet/outlet port 12 which are configured to input or discharge the recording medium.

The passage mechanism 2 comprises a first passage 21 and a loop passage 22. The first passage 21 consists of a first sub-passage 211 and a second sub-passage 212. The first end of the second sub-passage 212 is joined with the first sub-passage 211, and the second end thereof is joined with the loop passage 22. A set angle is formed at the junction of the first sub-passage 211 and the second sub-passage 212.

The first inlet/outlet port 11 is located at the leading end of the first passage 21, namely, the leading end of the first sub-passage 211, and the second inlet/outlet port 12 is located at the tail end of the first sub-passage 211, namely, between the first sub-passage 211 and the second sub-passage 212. The loop passage 22 is divided by the second sub-passage 212, forming two openings which are referred to as a first opening 22a and a second opening 22b for the convenience to describe.

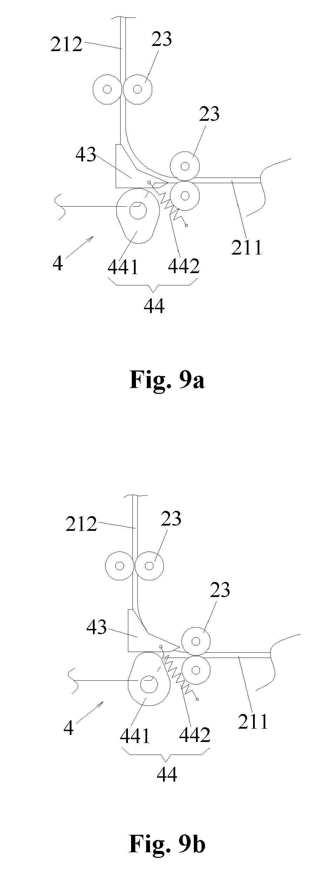

The guide mechanism 4 comprises a first guide plate 41, a second guide plate 43, a first driving mechanism 42 and a second driving mechanism 44, wherein the first guide plate 41 and the first driving mechanism 42 form a first guide mechanism (see Figs. 3a and 3b), and the second guide plate 43 and the second driving mechanism 44 form a second guide mechanism (see Figs. 9a and 9b).

The first guide plate 41 is located at the junction between the loop passage 22 and the second sub-passage 212, and articulated with a rack of the apparatus for processing a recording medium to be capable of rotating with respect to the articulated point, and configured to communicate the second end of the second sub-passage 212 with the first opening 22a or the second opening 22b of the loop passage 22. The first guide plate 41 is provided with an initial position and a switch position.

In the embodiment, when the first guide plate 41 is in the initial position, it communicates the second end of the second sub-passage 212 with the first opening 22a of the loop passage 22, and simultaneously closes the second end of the second sub-passage 212 from the second opening 22b of the loop passage 22, the recording medium can enter the loop passage 22 from the second sub-passage 212; After the recording medium moves in the loop passage 22 for one circle, the first guide plate 41 is rotated to the switch position from the initial position so as to communicate the second end of the second sub-passage 212 with the second opening 22b of the loop passage 22 and simultaneously to close second end of the second sub-passage 212 from the first opening 22a of the loop passage 22, so that the recording medium can be conveyed to the second sub-passage 212 from the loop passage 22.

The first driving mechanism 42 is connected with the first guide plate 41 and configured to drive the first guide plate 41 to switch between the initial position and the switch position. The first driving mechanism 42 may be an electromagnet mechanism, an elastic mechanism or a motor mechanism.

The second guide plate 43 is located at the junction between the first sub-passage 211 and the second sub-passage 212 and configured to guide the recording medium to be conveyed in a path formed by the first sub-passage 211 and the second sub-passage 212 or in a path formed by the first inlet/outlet port 11, the first sub-passage 211 and a second inlet/outlet port 12.

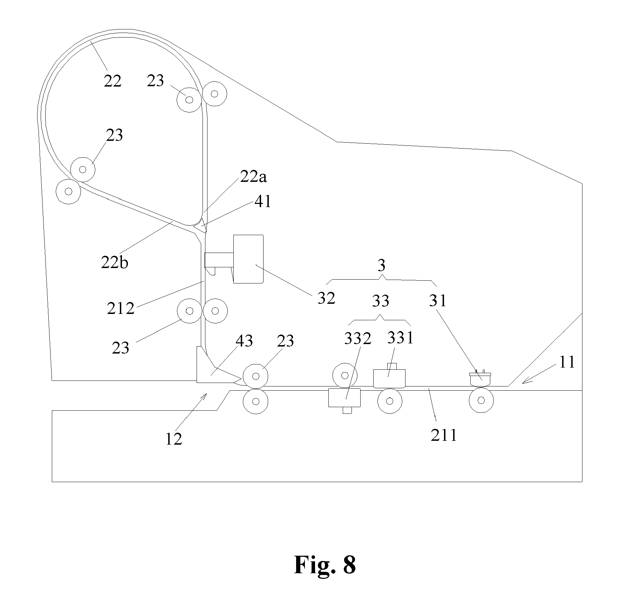

For the convenience to describe, the former path is referred to as the first path and the latter path is referred to as the second path. The second guide plate 43 is provided with a first position and a second position. When the second guide plate 43 is in the first position, the first path is communicated (open), and simultaneously the second path is closed (see Fig. 8); and when the second guide plate 43 is in the second position, the second path is communicated (open), and simultaneously the first path is closed.

The second driving mechanism 44 is connected with the second guide plate 43 and configured to drive the second guide plate 43 to switch between the first position and the second position. The second driving mechanism 44 may be an electromagnet mechanism or cam mechanism. The second driving mechanism 44 is preferably an electromagnet mechanism, which is implemented in the way similar to the first driving mechanism and therefore the description thereof is omitted herein.

Figs. 9a and 9b exemplarily show the schematic view of the second driving mechanism 44 as a cam mechanism, and Fig. 9a and 9b are shown by means of partial enlargement for clearness.

As shown in Figs. 9a and 9b, the second driving mechanism 44 comprises a cam 441 and an elastic element 442, the cam 441 is engaged in contact with the second guide plate 43, one end of the elastic element 442 is connected with the second guide plate 43 and the other end thereof is connected with the rack of the apparatus for processing the recording medium, and the second guide plate 43 tends to be always in the second position under the elasticity effect of the elastic element 442. By controlling the cam 441 to rotate to the set position, the second guide plate 43 can be switched between the first position and the second position.

The passage mechanism 2 further comprises a plurality of conveying rollers 23 which are arranged in the first passage 21 and the loop passage 22 and configured to convey the recording medium.

The processing device 3 comprises a magnetic head 31, a print head 32 and a scanning device 33. The magnetic head 31 is located in the leading end of the first sub-passage 211 which is adjacent to the first inlet/outlet port 1, and the print head 32 is located at an end of the second sub-passage 212 which is adjacent to the first guide plate 41. The scanning device 33 is located in the first sub-passage 211. The scanning device 33 comprises a first image sensor 331 and a second image sensor 332 which are arranged opposite to each other and configured to obtain the images of the first side and the second side of the recording medium, respectively.

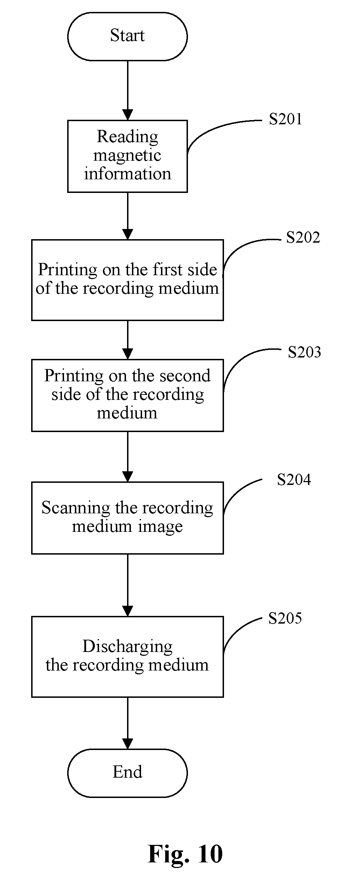

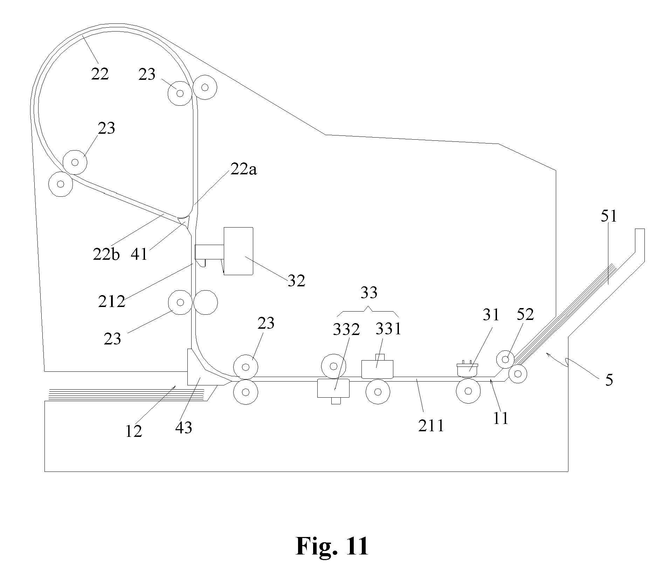

The working flow of the apparatus for processing a recording medium according to the third embodiment of the present invention will be described with reference to Fig. 10 and Fig. 11.

S201: reading the magnetic information

The recording medium enters the first sub-passage 211 from the first inlet/outlet port 11, and the magnetic head 31 reads the magnetic ink information embedded in the side of the recording medium during the movement of the recording medium. At this moment, the second guide plate 43 is in the first position, the first path is communicated, and the recording medium is guided into the second sub-passage 212.

S202: printing on the first side

When the recording medium moves to the position of the print head, the first side of the recording medium is opposite to the print head. After the recording medium moves into the print position, the print head is driven by a control device to print, and the print head prints the set information on the first side of the recording medium during the movement of the recording medium. At this moment, the first guide plate 41 is in the initial position to guide the recording medium to enter the loop passage 22 from the first opening 22a.

S203: printing on the second side

After the recording medium completely enters the loop passage 22, the first guide plate 41 is rotated to the switch position. After the recording medium moves in the loop passage for one circle, the first guide plate 41 guides the recording medium to back to the second sub-passage 212 from the second opening 22b. As the recording medium moves in the loop passage for one circle, when the recording medium moves to the position of the print head 32, the second side of the recording medium is opposite to the print head 32. After the recording medium moves into the print position, the print head 32 is driven by the control device to print, and the print head prints the set information on the second side of the recording medium during the movement of the recording medium.

S204: scanning the recording medium image

The recording medium moves back the first sub-passage 211 under the guide of the second guide plate 43, and the scanning device 33 is driven by the control device to obtain the recording medium surface image during the movement of the recording medium.

S205: discharging the recording medium

After the scanning device obtains the image of the first side and/or second side of the recording medium, the recording medium is discharged from the apparatus for processing a recording medium through the first inlet/outlet port 11 or second inlet/outlet port 12. When the recording medium is discharged through the second inlet/outlet port 12, the second guide plate 43 is controlled by the control device to switch to the second position, so that the second path is communicated and thus the recording medium is discharged through the second inlet/outlet port 12.

It should be noted that above working flow is just one preferred embodiment among others, and the apparatus for processing a recording medium shall not be limited to above working flow and may be adjusted according to requirements.

Preferably, in S201, during the movement of the recording medium, reading magnetic information and scanning image may be carried out simultaneously to obtain the image information of the original recording medium while the magnetic ink information embedded on the surface of the recording medium is read, for an electronic backup of the original recording medium.

Preferably, an automatic paper feeder 5 is arranged at the first inlet/outlet port 11, the automatic paper feeder 5 comprises a paper box 51 and a paper distribution roller 52, the paper box 51 is configured to store a stack of recording mediums to be processed, and the paper distribution roller 52 is configured to convey recording mediums of the stack into the first sub-passage 211 one by one. After S204 is executed, the recording medium is controlled to be discharged through the second inlet/outlet port 12 so as to realize the automatic processing of a plurality of recording mediums.

From above descriptions, it can be seen that, in the apparatus for processing a recording medium of the present invention, the straight passage is joined with the loop passage, the recording medium is guided by the guide mechanism to be conveyed in the loop passage, the processing device is arranged in the straight passage, and operations for the recording medium with embedded information, such as reading the embedded information and printing on both sides of the recording medium, can be realized. Particularly, the recording medium can be turned over automatically during moving by using the loop passage, so that the printing on both sides of the recording medium can be realized by one single print head, and thus a comprehensive process on the recording medium with embedded information is realized, and the cost of the apparatus is reduced.

The above is only for describing the preferred embodiments of the present invention and not intended to limit the present invention. The present invention may have various modifications and changes for the skilled person in the art. Any modifications, equivalents and improvements made within the spirit and principle of the present invention should be included within the scope of the present invention.

## Claims

1. An apparatus for processing a recording medium with embedded information, comprising:
a passage mechanism (2) including a first passage (21), a loop passage (22) and recording medium conveying rollers (23), wherein a first opening (22a) and a second opening (22b) of the loop passage (22) are connected to the tail end of the first passage (21);
a first guide mechanism (41, 42) configured to selectively communicate the first passage (21) with the first opening (22a) or the second opening (22b) of the loop passage (22); and
a processing device (3) including a magnetic head (31) and a print head (32) which are arranged in the first passage (21), wherein the magnetic head (31) is arranged at a side of a recording medium inlet/outlet port (11) which is adjacent to a leading end of the first passage (21).

2. The apparatus for processing a recording medium with embedded information according to claim 1, **characterized in that** the first guide mechanism (41, 42) comprises:
a first guide plate (41) arranged at the tail end of the first passage (21) and provided with an initial position in which the first passage is communicated with one of the first opening (22a) and the second opening (22b) and a switch position in which the first passage is communicated with the other one of the first opening (22a) and the second opening (22b); and
a first driving mechanism (42) configured to drive the first guide plate (41) to switch between the initial position and the switch position.

3. The apparatus for processing a recording medium with embedded information according to claim 2, **characterized in that** the first driving mechanism (42) is an electromagnet driving mechanism.

4. The apparatus for processing a recording medium with embedded information according to claim 2, **characterized in that** the first driving mechanism (42) is an elastic element, wherein one end of the elastic element is connected with the first guide plate (41) and the other end thereof is connected with a rack of the apparatus for processing a recording medium.

5. The apparatus for processing a recording medium with embedded information according to claim 1, **characterized in that** the processing apparatus (3) further comprises a scanning module (33) located within the first passage (21) and including at least one image sensor.

6. The apparatus for processing a recording medium with embedded information according to claim 1, **characterized in that** the first passage (21) comprises:
a first sub-passage (211) and a second sub-passage (212), wherein a recording medium inlet/outlet port (12) is arranged between the first sub-passage (211) and the second sub-passage (212),
wherein a second guide mechanism (43, 44) is arranged between the first sub-passage (211) and the second sub-passage (212) and configured to selectively communicate the first sub-passage (211) with the recording medium inlet/outlet port (12) or the second sub-passage (212).

7. The apparatus for processing a recording medium with embedded information according to claim 6, further comprising:
an automatic paper feeder located on the upstream of the recording medium inlet/outlet port (11) at the leading end of the first passage (21) and configured to store a plurality of recording mediums to be processed and feed the plurality of recording mediums to be processed into the first sub-passage (211) one by one.

8. The apparatus for processing a recording medium with embedded information according to claim 6, **characterized in that** the second guide mechanism (43, 44) comprises:
a second guide plate (43) having a first position in which the recording medium inlet/outlet port (12) is communicated with the first sub-passage (211) and a second position in which the recording medium inlet/outlet port is communicated with the second sub-passage (212);
a cam (441) configured to drive the second guide plate (43) to move between the first position and the second position; and
an elastic element (442) configured to keep the second guide plate (43) in the first position.

9. A method for processing a recording medium with embedded information, comprising the following steps:
A) reading the magnetic information embedded in the recording medium during the movement of the recording medium into the first passage;
B) printing on the first side of the recording medium after the magnetic information thereof is read;
C) after guiding the printed recording medium into the loop passage at the tail end of the first passage, returning the recording medium back into the first passage so as to turn the recording medium over; and
D) printing on the second side of the recording medium during the recording medium moving away from the first passage.

10. The method for processing a recording medium with embedded information according to claim 9, **characterized in that** Step A further comprises:
when reading magnetic information of the recording medium is failed, guiding the recording medium out from the first passage before guiding the recording medium into the loop passage.

11. The method for processing a recording medium with embedded information according to claim 9, further comprising:
E) before Step B, scanning the recording medium image before the printing; and
F) after Step D, scanning the recording medium image after the printing.
